# EUROPEAN PATENT APPLICATION

(11) **EP 4 560 153 A1**
(43) Date of publication of application: **28.05.2025**
(21) Application number: 24214272.7
(22) Date of filing: 20.11.2024
(51) Int. Cl.: F16B 13/12

(54) **BI-MATERIAL EXPANSION PLUG**

(30) Priority: 27.11.2023 IT 202300025176
(71) Applicant: Nobex S.r.l., 10090 Villarbasse (Torino) (IT)
(72) Inventor: DELLA CORTE, Gaetano, I-10090 Villarbasse (Torino) (IT)
(74) Representative: Buzzi, Notaro & Antonielli d'Oulx S.p.A.

(57) **Abstract**

An expansion plug comprising: a support body (12) made of a first thermoplastic material, having two expansion arms (20) extending between a collar (16) and a terminal (18), and wherein two windows (22) are formed between the two expansion arms (20) and are opposite each other, and a covering element (34) made of a second thermoplastic material overmolded on the support body (12), having two filling portions (36) each of which fills a respective window (22), wherein the filling portions (36) have respective grooves (38) open along external sides of the expansion plug (10) and separated from the central cavity (14) by respective membranes (40) configured to break during the screwing of a screw.

## Description

### TEXT OF THE DESCRIPTION

### Field of the invention

The invention relates to an expansion plug intended to be inserted into a hole in a wall and designed to serve as an anchor for a fastening screw.

More specifically, the invention relates to an expansion plug made from two different plastic materials.

### Description of related art

Plastic expansion plugs comprise a molded plastic body with a central cavity configured to receive a threaded screw. Generally, the body includes a collar, a terminal, and a plurality of expansion arms extending between the collar and the terminal.

Traditional expansion plugs are usually made from a single plastic material, which may contain a percentage of elastomeric polymer to facilitate the deformation of the body during the screw tightening phase.

The main drawback of single-material expansion plugs is that the expansion sectors of the plug do not ensure sealing over the entire circular surface of the plug. Therefore, traditional solutions may have anchoring issues under certain usage conditions.

Furthermore, the screw inserted into the plug during installation may deviate laterally, particularly when the plug is inserted into hollow materials, which can compromise correct installation.

To improve sealing conditions, expansion plugs made from two different plastic materials have been proposed.

Examples of bi-material expansion plugs are described in EP3175131B1, EP3175128B1, EP3175130B1, EP3995706B1, EP4001675A1.

In these solutions, the two different materials that make up the plug body are separated from each other and during installation, they separate to create a seal along two orthogonal directions.

However, these solutions lead to a decrease in the surface area of the sealing zone. Additionally, the sealing zone can be inhomogeneous and not very compact.

FR3027639B1 describes an expansion plug intended to be anchored inside a hole made in a wall, comprising a hollow inner part formed from a first polymeric material with a first hardness, an axial groove passing through the hollow inner part, and an outer part extending at least partially around the inner part and made of a second polymeric material with a second hardness, in which the first polymeric material has a greater hardness than the second polymeric material.

This solution also has limitations, particularly regarding the stability and homogeneity of the anchoring, the possibility of lateral screw deviation, and potential production defects due to the formation of burrs in the axial groove.

### Object and summary of the invention

The object of the present invention is to provide an expansion plug that solves the problems of prior art.

In particular, the object of the present invention is to provide an expansion plug that has stable, homogeneous anchoring, with high sealing performance on solid, hollow, void materials, panels, sheets, etc., that avoids the possibility of lateral screw deviation during assembly, and that eliminates production defects due to burr formation.

According to the present invention, this object is achieved by an expansion plug having the characteristics set forth in claim 1.

Preferred embodiments form the subject of the dependent claims.

The claims form an integral part of the teaching provided in relation to the invention.

### Brief description of the drawings

The present invention will now be described in detail with reference to the accompanying drawings, given purely by way of non-limiting example, in which:
- Figure 1 is a perspective view of an expansion plug according to the present invention,
- Figure 2 is a perspective view illustrating the support body of the expansion plug of Figure 1,
- Figure 3 is an axial section along line III-III of Figure 2,
- Figure 4 is a perspective view illustrating the covering element of the expansion plug of Figure 1, and
- Figures 5 and 6 are cross-sections along lines V-V and VI-VI of Figure 1.

### Detailed description

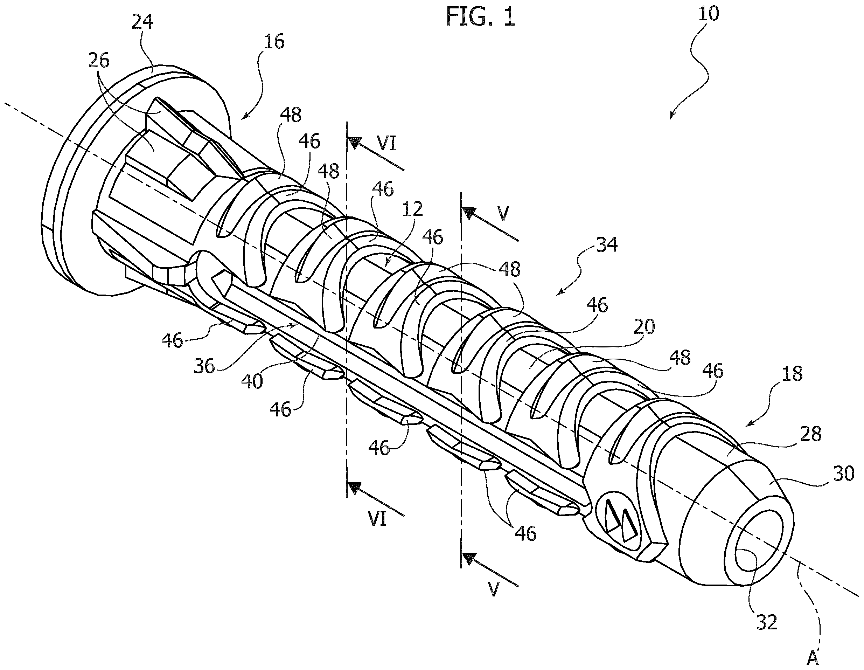

Referring to figure 1, reference number 10 indicates an expansion plug according to the present invention.

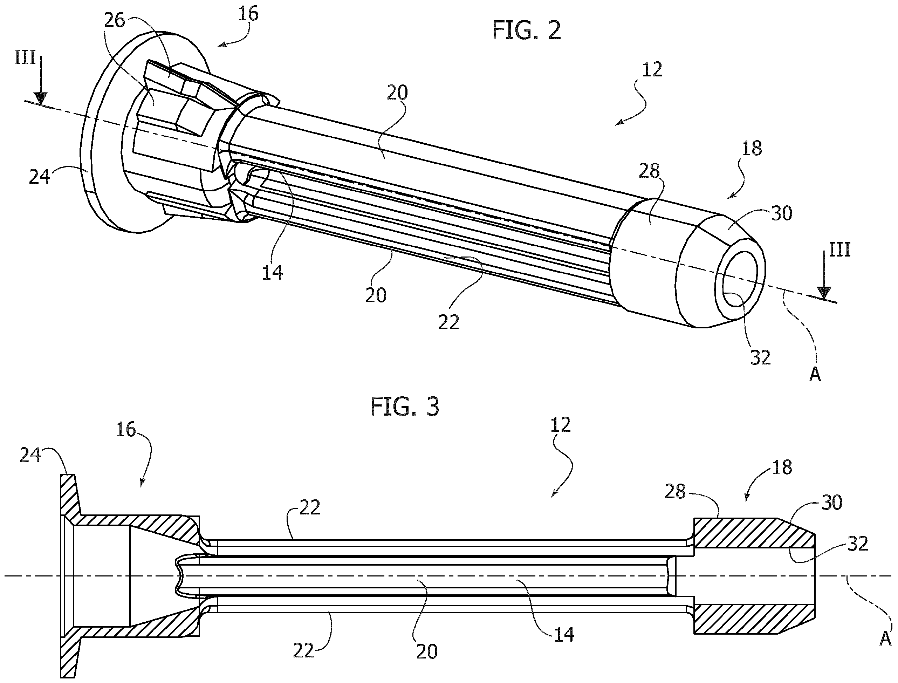

Referring to figures 2 and 3, the expansion plug 10 comprises a support body 12 made from a first molded plastic material.

The support body 12 has a central cavity 14 elongated along a longitudinal axis A and configured to receive a screw (not shown).

The support body includes a collar 16, a terminal 18, and two expansion arms 20 that extend between the collar 16 and the terminal 18 on opposite sides of the central cavity 14.

The expansion arms 20 are parallel and opposite to each other. Between the two expansion arms 20, two opposite windows 22 are formed. The two windows 22 are elongated along the longitudinal axis A and extend for the entire length of the expansion arms 20.

The collar 16 includes a radially outwardly projecting edge 24, which prevents the expansion plug from disappearing into the installation hole during the insertion phase. On collar 16, a plurality of fins 26 are provided that serve as anchorage for the expansion plug 10 within the installation material and prevent rotation of the expansion plug 10 during the tightening phase.

The terminal 18 has a cylindrical section 28 and a truncated conical end 30 that facilitates the insertion of the expansion plug 10 into the installation hole. The terminal 18 has a through axial hole 32 into which the end of a screw is to be screwed.

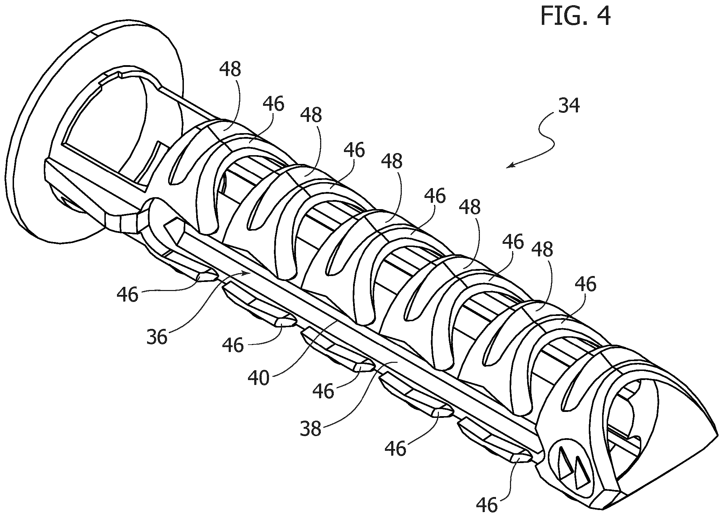

Referring to figures 1 and 4, the expansion plug 10 comprises a covering element 34 made from a second plastic material overmolded on the support body 12. The covering element 34 is permanently fixed to the support body 12 along all mutual contact surfaces.

Referring to figures 4, 5, and 6, the covering element 34 has two filling portions 36 located on opposite sides of the central cavity 14 of the support body 12. Each of the filling portions 36 fills a respective window 22 of the support body 12. Each of the filling portions 36 is permanently fixed between the two expansion arms 20 of the support body 12.

Referring to figures 1 and 4, the filling portions 36 have respective axial grooves 38. The axial grooves 38 extend parallel to the longitudinal axis A of the expansion plug 10. Each of the axial grooves 38 has a V-shaped section open on a respective outer flank of the expansion plug 10.

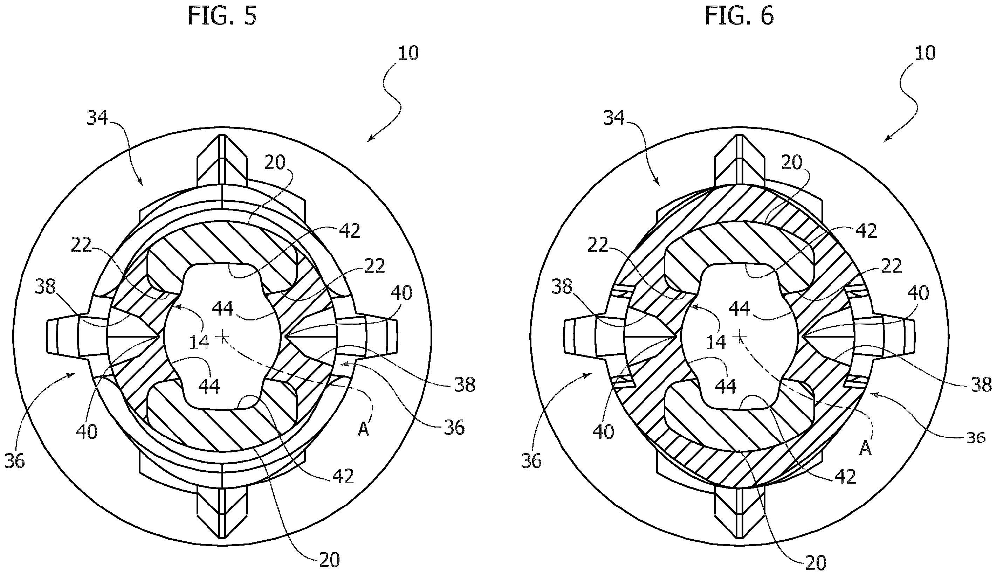

Referring to figures 5 and 6, the axial grooves 38 are separated from the central cavity 14 of the expansion plug 10 by respective membranes 40.

The membranes 40 extend along a straight direction parallel to the longitudinal axis A.

The axial grooves 38 and the membranes 40 extend longitudinally for the entire length of the expansion arms 20.

As visible in figures 5 and 6, the expansion arms 20 and the filling portions have respective internal surfaces 42, 44 that define a closed surface surrounding the central cavity 14. The membranes 40 are in contact with the internal surfaces 44 of the respective filling portions 36.

The membranes 40 of the two filling portions 36 are configured to break during the screwing of a screw into the central cavity 14. The breakage of the membranes 40 is caused by the engagement of the screw thread with the internal surfaces 44 of the filling portions 36.

After the breakage of the membranes 40, the axial grooves 38 become open in the central cavity 14. After the breakage of the membranes 40, the two expansion arms 20 are no longer connected by the filling portions 36. Therefore, the radial expansion of the expansion arms 20 following the tightening of the screw is facilitated.

The membranes 40 have an important function from the point of view of the quality of the production process of the expansion plugs 10. The fact that the grooves 38 are not open in the central cavity 14 ensures that the mold parts forming the grooves 38 (matrix and die) do not need to come into mutual contact during molding of the expansion plugs 10. This significantly reduces mold wear and prevents the formation of burrs during the molding process. This allows the industrial production of expansion plugs with very low waste and prevents the production of expansion plugs with burr defects.

The membranes 40 also guide the screw gradually up to the terminal 18 and prevent lateral deviations of the screw along the longitudinal axis during the tightening phase.

Furthermore, the membranes 40 have a dustproof function that protects the screw during the screwing phase.

Referring to figures 1 and 4, the covering element 34 comprises two rows of curved connecting portions 46 that connect the two filling portions 36. The curved connecting portions 46 are spaced apart in the direction of the longitudinal axis A. The curved connecting portions 46 of each row are overmolded on the outer surfaces of respective expansion arms 20.

The curved connecting portions 46 may have respective protrusions 48 with parabolic profiles that improve the grip of the expansion plug 10 on the walls of the installation hole.

The covering element 34 and the support body 12 are made from chemically compatible thermoplastic materials that establish a thermochemical bond along all mutual contact surfaces during the molding phase.

The thermochemical bond between the materials forming the covering element 34 and the support body 12 allows for a more homogeneous expansion of the expansion plug on any type of support and greater retention. Indeed, the anchoring force of the expansion plug is distributed over the entire surface involved with greater uniformity and is not dispersed over different elements that expand separately but with a smaller retention area.

The first thermoplastic material forming the support body 12 may have a greater hardness than the hardness of the second plastic material.

The first thermoplastic material forming the support body 12 may have high mechanical resistance and, at the same time, high elastic characteristics. The second thermoplastic material forming the covering element 34 may be an elastomeric material with greater elasticity and softness, allowing the plug to be inserted even into imperfect holes, contributing to a fastening that adapts also to dynamic stress by absorbing any vibration solicitations.

In an alternative embodiment, the second thermoplastic material may have mechanical resistance characteristics superior to those of the first thermoplastic material.

The two thermoplastic materials fuse together, establishing a thermochemical bond and forming a new material that presents the characteristics of both individual materials. The characteristics of the two materials actively contribute to the retention of the plug, generating a torque superior to that of plugs according to the known technique on every type of surface, such as solid walls (compact or friable), perforated and hollow walls, panels, sheets, etc.

Of course, without prejudice to the principle of the invention, the construction details and embodiments can be widely varied from what is described and illustrated without departing from the scope of the invention as defined by the claims that follow.

## Claims

1. An expansion plug comprising:
- a support body (12) made of a first thermoplastic material, wherein the support body (12) has an elongated central cavity (14) along a longitudinal axis (A) and is configured to receive a screw, wherein the support body (12) includes a collar (16), a terminal (18), and two expansion arms (20) extending between the collar (16) and the terminal (18) on opposite sides of said central cavity (14), wherein the expansion arms (20) are parallel and opposite to each other, and wherein two windows (22) are formed between the two expansion arms (20) and are opposite each other, and
- a covering element (34) made of a second thermoplastic material, different from said first thermoplastic material, overmolded on the support body (12), wherein the covering element (34) has two filling portions (36) located on opposite sides of said central cavity (14), each of which fills a respective window (22) and is fixed between the two expansion arms (20), wherein said filling portions (36) have respective grooves (38) open along external sides of the expansion plug (10) and separated from the central cavity (14) by respective membranes (40) configured to break during the screwing of a screw into said central cavity (44).

2. The expansion plug of claim 1, wherein each of said membranes (40) extends along a straight direction parallel to said longitudinal axis (A).

3. The expansion plug of claim 1, wherein each of said grooves (38) has a V-shaped section and extends parallel to said longitudinal axis (A).

4. The expansion plug of any of the preceding claims, wherein said expansion arms and said filling portions (36) have respective inner surfaces (42, 44) that define a closed surface of the central cavity (14).

5. The expansion plug of claim 4, wherein each of said membranes (40) is in contact with the inner surface (44) of the respective filling portion (36).

6. The expansion plug of any of the preceding claims, wherein said grooves (38) and said membranes (40) extend along the entire length of the expansion arms (20).

7. The expansion plug of any of the preceding claims, wherein the covering element (34) comprises two arrays of curved connecting portions (46) that connect the two filling portions (36) to each other, wherein the curved connecting portions (46) of each array are spaced apart in an axial direction and are overmolded on the external surface of a respective expansion arm (20).

8. The expansion plug of claim 6, wherein said curved connecting portions (46) have respective protrusions with parabolic profiles (48).

9. The expansion plug of any of the preceding claims, wherein the covering element (34) and the support body (12) are made of thermoplastic materials that are chemically compatible with each other, establishing a thermochemical bond along all mutual contact surfaces.

10. The expansion plug of any of the preceding claims, wherein the second plastic material has a hardness lower than the hardness of the first plastic material.
